# EUROPEAN PATENT APPLICATION

(11) **EP 0 901 078 A1**
(43) Date of publication of application: **10.03.1999**
(21) Application number: 98402188.1
(22) Date of filing: 04.09.1998
(51) Int. Cl.: G06F 12/08

(54) **Cache enabling architecture**

(30) Priority: 08.09.1997 EP 97115527
(71) Applicant: DEUTSCHE THOMSON-BRANDT GMBH, 78048 Villingen-Schwenningen (DE)
(72) Inventor: Lebegue, Xavier, 92648 Boulogne (FR); Schweer, Rainer, 92648 Boulogne (FR)
(74) Representative: Zhang, Jianguo

(57) **Abstract**

A cache enabling architecture in which a storage reading and/or writing device (2), a caching processor (5) and a mass writing and reading device (3) are each connected to a data bus (1). The storage reading and/or writing device exchanges information directly with the caching processor over the data bus. The caching uses the mass writing and reading device as cache memory.

## Description

The present invention relates to a cache enabling architecture in which information at an output and/or input of a storage reading and/or writing device may be cached. The cache enabling architecture may for example be implemented in a computer system to which the storage reading and/or writing device is connected. Typically the connection is done via a data bus.

Caching information from storage devices is a known technology. More specially and as examples many solutions are known to cache Random Access Memory, hard disk drive devices and other mass storage devices. These memory devices are of common use in or in combination with computers. The requirements to cache a memory device are basically to provide a faster memory in which information may be accessed more efficiently than in the memory device, and to copy determined information from the memory device to the faster memory or vice versa. The determined information may for example be information which is most likely to be needed or most frequently needed. The copying and an identification of the determined information among information contained in the memory device (or in the faster memory) is performed by a cache processor. The cache processor may for example be a software program which runs on a computer. Caching thus improves the overall performance of information processing systems such as a microprocessor processing information stored in a RAM, or a computer processing information stored on a mass storage device peripheral.

Computers typically are used with peripherals such as magnetic and/or optical storage devices. These storage devices are connected directly or indirectly to a data bus. A microprocessor conducts information exchanges over the data bus between devices connected to this data bus. The performance in terms of access times to information stored on the storage devices varies depending on the nature of the storage devices. For example a performance of a magnetic hard disk drive device may be substantially greater than a performance of an optical disk device. It is known to cache an optical disk device using a magnetic disk drive device as faster memory.

In one implementation of caching a cache processor performs the caching using a direct link between the optical disk device and the hard disk drive device over which information is exchanged. The direct link is required because there is no other way to exchange information between the optical disk device and the magnetic hard disk device without involving the microprocessor and thus substantially slowing down the computer. On the other hand the direct link is a piece of hardware which does not belong to a standard computer equipment and which thus may add to the costs of producing a computer equipped with storage device peripherals.

It is an object of the present invention to find a solution in which a storage device peripheral may be cached using another storage device peripheral but eliminating the need for an own direct link between the two peripherals. The solution should as much as possible make use of an existing computer hardware.

Recent computer hardware comprises a data bus over which two peripherals may exchange data without significantly interfering with other peripheral connected to the data bus. This means that the microprocessor may perform other tasks than conducting information exchange between the two peripherals. The data bus may for example be based on a IEEE 1394 bus.

According to the present invention a solution to the above mentioned problem is found in a cache enabling architecture for caching information at an output and/or input of a storage reading and/or writing device, comprising at least a mass writing and reading device, a data bus to which the mass writing and reading device is indirectly or directly connected and through which instructions sent from further devices other than said storage device, reach the mass writing and reading device, and a caching processor to cache the information using the mass writing and reading device. The caching processor is directly connected to the mass writing and reading device. The output and/or input of the storage reading and/or writing device and the caching processor are connected through the data bus, so as to directly exchange the information between the output and/or input and the caching processor.

According to the present invention no direct link is required between the storage reading and/or writing and the mass writing and reading device. The invention makes use of a possibility for two devices to exchange information between each other through the data bus.

In a first advantageous embodiment of the cache enabling architecture according to the invention the mass writing and reading device is a magnetic hard disk drive device.

The magnetic hard disk drive offers an advantageous price/performance ratio and is used in most computers.

In a second advantageous embodiment of the cache enabling architecture according to the invention the storage reading and/or reading device is an optical disk drive device.

Optical disk drive devices offer a relatively cheap way to access / store large quantities of information.

In a third advantageous embodiment of the cache enabling architecture according to the invention the data bus is based on an IEEE 1394 bus.

The IEEE 1394 bus offers good performance as a data bus in computers and allows for direct communication between devices connected to it.

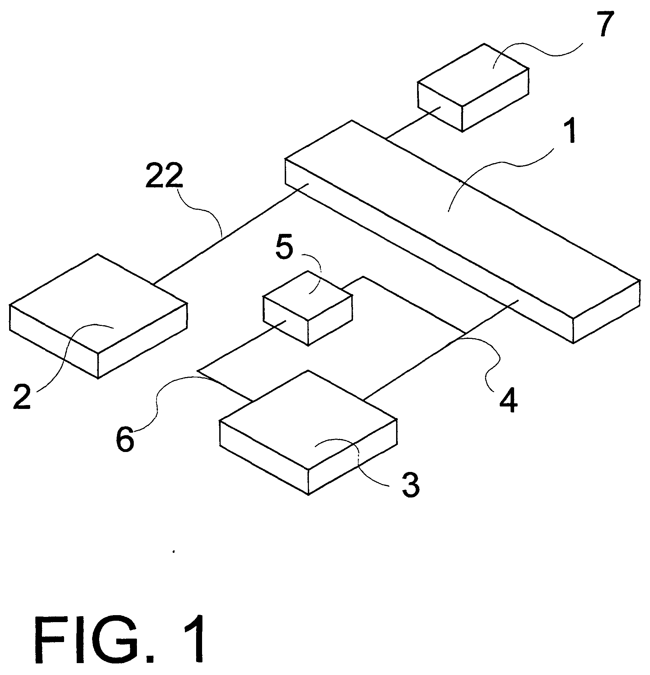

The invention will be explained in more detail in the following using examples and FIG. 1 which contains a schematic representation of a cache enabling architecture. The examples used are not limitative and other embodiments may be considered by a man skilled in the art which fall in the scope of the present invention.

FIG. 1 shows a data bus 1 which may be part of a computer (not shown). The data bus 1 may for example be an IEEE 1394 based bus. The IEEE 1394 bus is a highspeed serial bus which allows to transport digital data. A storage reading and/or writing device 2 is connected to the data bus 1 through an output and/or input connector link 22. The storage reading and/or writing device 2 may for example be a CD-ROM, DVD-ROM/RAM or CD-RW drive. A mass writing and reading device 3 is connected to the data bus 1 through a link 4. The mass writing and reading device 3 may for example be a magnetic hard disk drive. A caching processor 5 is linked to the mass writing and reading device 3 through a link 6 and to the data bus 1 through the link 4.

The performance of the mass writing device 3 in terms of access time to information and transfer rate is typically greater than the performance of the storage reading and/or writing device 2. The caching processor 5 exchanges information with the storage reading and/or writing device 2 directly through the data bus 1. The caching processor 5 may for example send a request for information to the storage reading and/or writing device 2 upon which the latter transmits the requested information to the caching processor 5. The caching processor 5 sends the received requested information to the mass writing and reading device 3 which stores it.

Typically a further device 7 is connected to the data bus 1. The further device 7 may for example be a microprocessor. The further device 7 sends requests for information to either the mass writing and reading device 3 or to the caching processor 5 which stands for the storage reading and/or writing device 2. The caching processor 5 processes these requests for information, gets the requested information from the mass writing and reading device 3 if the requested information is stored there or from the storage reading and/or writing device 2 if it is not and finally transmits it to the further device 7.

The caching processors 5 may also analyze the requests for information over a period of time and according to caching strategies. Caching strategies are well known to a man skilled in the art. As a result of the analysis the caching processor 5 may determine which determined information is requested more frequently by the further device 7 than other information. The caching processor 5 may keep the determined information stored on the mass writing and reading device as long as it is frequently requested. The caching processor 5 may also implement a caching strategy known as read ahead, therewith anticipating requests for information of the further device 7.

In a further embodiment the caching processor 5 may also be used to receive information sent by the further device 7 on the data bus 1 and intended to be stored in the storage reading and/or writing device 2. The caching processor 5 will first send the received information to the mass writing and reading device 3 which stores it before copying this information from the mass writing and reading device 3 to the storage reading and/or writing device 2. A writing performance of the latter is thereby virtually increased by taking advantage of a writing performance of the mass writing and reading device 3.

Devices connected to the data bus 1 exchange information using communication protocols. In a preferred embodiment a communication protocol used between the storage reading and/or writing device 2 and the cache processor 5 may be an optimized version of a communication protocol used between the further device 7 and the caching processor 5 in order to enhance simplicity and performance.

Typically the mass writing and reading device 3 may comprise a dedicated caching processor of its own which caches the mass writing and reading device 3 itself. In a preferred embodiment a functionality of the caching processor 5 may include functions of the dedicated caching processor thereby eliminating the need for a physically distinct dedicated caching processor and further reducing costs.

## Claims

1. Cache enabling architecture for caching information at an output and/or input of a storage reading and/or writing device (2), comprising
- at least a mass writing and reading device (3),
- a data bus (1) to which said mass writing and reading device is indirectly or directly connected and through which instructions sent from further devices (7) other than said storage reading and/or writing device, reach the mass writing and reading device,
- a caching processor (5) to cache said information using said mass writing and reading device, said caching processor being directly connected to said mass writing and reading device,
characterized in that said output and/or input of said storage reading and/or writing device and said caching processor are connected through said data bus, so as to directly exchange said information between said output and/or input and said caching processor.

2. Cache enabling architecture according to claim 1 characterized in that said mass writing and reading device is a magnetic hard disk drive device.

3. Cache enabling architecture according to anyone of claims 1 or 2 characterized in that said storage reading and/or writing device is an optical disk drive device.

4. Cache enabling architecture according to anyone of claims 1 to 3 characterized in that said data bus is based on a IEEE 1394 bus
